# FASCICULE DE BREVET EUROPEEN

(11) **EP 2 765 009 B1**
(45) Date de publication et mention de la délivrance du brevet: **18.12.2019**
(21) Numéro de dépôt: 14000406.0
(22) Date de dépôt: 04.02.2014
(51) Int. Cl.: B60B 5/02, B60B 21/08, B60B 1/00

(54) **Jante en matériau composite**
Felge aus Verbundmaterial
Rim made of a composite material

(30) Priorité: 06.02.2013 FR 1300244
(43) Date de publication de la demande: 13.08.2014
(73) Titulaire: MAVIC S.A.S., 74370 Metz-Tessy (FR)
(72) Inventeur: Davoine, Michel, 74540 Gruffy (FR)
(74) Mandataire: Rambaud, Pascal

(56) Documents cités:
- EP-A1- 2 684 707
- WO-A1-86/01463
- WO-A1-2004/103732
- DE-A1- 1 605 543
- DE-U1-202007 007 997

## Description

L'invention concerne une méthode de fabrication d'une jante pour une roue et une roue avec une jante ainsi obtenue. La jante ou une portion de jante est réalisée en matériau composite. Des jantes sont utilisées dans des véhicules propulsées par la force musculaire avec une ou deux voies pour une ou plusieurs personnes comme des vélos, des fauteuils roulants et des moyens de transport.

Les jantes ou les portions de jante réalisées en matériau composite, sont très appréciées par les cyclistes pour le rapport rigidité/poids qu'elles offrent. Les possibilités de choix de matériaux pour la fabrication d'une jante composite sont nombreuses. On peut par exemple utiliser des fibres de verre, de carbone, ou d'aramide, noyées dans une matrice pouvant être de type thermoplastique ou thermodurcissable. De plus, on peut choisir des fibres de différentes longueurs, et agencées les unes avec les autres suivant différentes configurations. Par exemple, une combinaison de fibres courtes au sein d'une matrice thermoplastique permettra la fabrication d'une jante par injection.

Le document EP 1 625 028 A1 divulgue une jante pour vélos, qui comprend une zone de freinage sur au moins un flanc de la jante pour le placement d'un corps de freinage, laquelle zone de freinage est constituée de plastique renforcé de fibres sous la forme d'un produit semi-fini en fibres de renfort plan et stratifié. Le document divulgue que le plastique, respectivement la résine à la surface a une qualité défavorable, qui nécessite des plaquettes de frein spéciales en liège. Pour améliorer le freinage, le document propose de résoudre ce problème en usinant à l'aide d'outil de coupe la surface de la zone de freinage de façon à mettre à découvert une fraction de fibres de renfort mise à nue supérieure à 10%. Cependant, cette mise à nue d'une portion pouvant aller jusqu'à 80% des fibres présente de nombreux inconvénients. Tout d'abord, lorsqu'on met à nu les fibres à l'aide des outils de coupe, on va plus loin qu'une simple mise à nu et on sectionne et on endommage les fibres. Par conséquent, la structure de la jante peut être affaiblie par l'usinage. C'est pourquoi la conception de la jante doit être telle que même après usinage elle possède la résistance désirée. En pratique, on dispose au niveau de la zone de freinage, d'un surplus de fibre, lequel sera ultérieurement usiné pour mettre à nu les fibres. Une telle fabrication qui inclut l'utilisation d'un surplus de matière perdue est coûteuse et conduit à un certain gaspillage. De plus les roues ainsi fabriquées seront plus lourdes que nécessaire car toute la matière placée en surplus ne sera pas nécessairement usinée.

La présente invention a pour objectif de fournir une méthode de fabrication d'une jante et une roue avec une jante ainsi obtenu, une jante avec au moins une zone de freinage essentiellement en matériau composite, qui est légère, robuste et facile à fabriquer. En particulier, la présente invention a pour objectif d'améliorer la qualité de freinage des zones de freinage en matériau composite.

La méthode de fabrication pour une telle jante est avantageuse et comporte peu d'étapes de fabrication.

Cet objectif de l'invention est atteint par une méthode de fabrication d'une jante pour une roue, la jante comportant au moins une zone de freinage essentiellement réalisée en matériau composite et prévue pour recevoir un corps de freinage, une partie au moins de la zone de freinage comportant une structure macroscopique à la surface afin d'améliorer les caractéristiques de freinage, en particulier en conditions humides.

Selon des aspects avantageux, mais non obligatoires de l'invention, une telle roue peut incorporer une ou plusieurs des caractéristiques suivantes, prises en toute combinaison techniquement admissible :
- la structure macroscopique est conditionnée afin d'interrompre et/ou d'évacuer un film d'eau dans les zones de freinage,
- la zone de freinage, en particulier la surface, est en fibres de verre, en carbone et/ou en aramide, noyées dans une matrice pouvant être de type thermoplastique et/ou thermodurcissable,
- la structure macroscopique est réalisée uniquement dans un des composants du matériau composite, en particulier dans la matrice,
- la structure macroscopique est constituée de cavités, en particulier réalisées par gravure au laser,
- les cavités débouchent vers l'extérieur de la jante et/ou qu'au moins quelques-unes des cavités ont une composante radiale sur au moins une section par rapport à l'axe de symétrie centrale de la jante,
- la structure macroscopique forme des irrégularités le long de la zone de freinage et/ou au moins deux zones de freinage opposées d'une jante ont des structures macroscopiques différentes afin d'éviter la mise en résonance de la roue pendant un freinage,
- la structure macroscopique forme en plus un marquage décoratif et/ou fonctionnel de la jante.

Surtout, les structures aident à éliminer de l'eau sur la zone de freinage. D'une part, l'eau est repoussée dans les creux de la structure macroscopique quand les corps de freinage appuient sur la zone de freinage. D'autre part, la structure macroscopique brise la tension superficielle de l'eau. Ceci est en particulier atteint par les différentes orientations des faces de la structure macroscopique par rapport à la pesanteur et par des tourbillons qui se forment à la surface de la structure macroscopique et qui enlèvent le film pendant que la roue tourne. De plus pendant que la roue tourne, la structure macroscopique a pour effet qu'une composante radiale par rapport à l'axe de la roue est transférée aux molécules d'eau qui sont ensuite poussées hors de la zone de freinage (et/ou de la jante).

Au sens de la présente demande, on appelle roue la totalité des éléments d'un organe ou pièce mécanique de forme circulaire tournant autour d'un axe passant par son centre, en particulier la jante, en particulier les flancs de la jante et/ou la partie liant les flancs, le disque de frein, les rayons, le revêtement des rayons et/ou le moyeu.

Au sens de la présente demande, on appelle vélo une bicyclette étant un véhicule terrestre dont la force motrice est fournie par son conducteur, en position le plus souvent assise, par l'intermédiaire de deux pédales entraînant au moins une roue.

Au sens de la présente demande, on appelle une zone de freinage une étendue sur une surface de la roue qui est amenée à être en contact avec un élément de freinage, par exemple un patin ou une mâchoire.

Au sens de la présente demande, on appelle matériau composite un matériau dans lequel des fibres sont noyées dans une matrice. Un exemple de matériau composite est réalisé par le drapage de pièces de filaments tissés imprégnés de résine époxy, chaque filament étant constitué de fibres de carbone.

Au sens de la présente demande, on appelle corps de freinage un élément qui sert à freiner le mouvement rotatoire d'une roue.

Au sens de la présente demande, on appelle structure macroscopique une structure à l'échelle de l'ordre de grandeur de la taille humaine, en particulier perceptible par l'œil humain ou perceptible par contact tactile.

Au sens de la présente demande, on appelle marque une formation agencée dans au moins un creux et/ou une éminence de la structure macroscopique.

Au sens de la présente demande, on appelle témoin d'usure tout moyen afin de vérifier l'usure d'une roue, en particulier l'usure due au freinage.

Au sens de la présente demande, on appelle marquage décoratif ou fonctionnel une divergence de la structure macroscopique qui provoque un stimulus visuel et/ou tactile chez un observateur qui lui attribue une impression à la mode et/ou informative.

Selon un mode de réalisation de l'invention la structure macroscopique consiste en des cavités, en particulier réalisées par gravure au laser.

Au sens de la présente demande, on appelle irrégularité toute interruption de la périodicité de la structure macroscopique.

Les cavités ont pour effet de créer des canaux d'évacuation de la zone de freinage afin de guider l'humidité dans une direction définie.

Selon un mode de réalisation de l'invention, les cavités débouchent vers l'extérieur de la roue et/ou les cavités ont une composante radiale par rapport à l'axe de symétrie de la roue.

Grâce à ceci, l'humidité peut s'échapper des cavités vers l'extérieur de la roue sans être obligée de passer encore une fois par la surface qui forme la zone de freinage. La composante radiale des cavités augmente encore l'effet selon lequel un mouvement radial de la roue par rapport à son axe est transféré aux molécules d'eau qui sont ensuite repoussées hors de la zone de freinage (et/ou dans de la jante).

Selon un mode de réalisation de l'invention la structure macroscopique est symétrique ou asymétrique.

Une structure macroscopique symétrique a pour effet que la roue n'a pas de sens d'installation préféré (direction avant/arrière). Une structure macroscopique asymétrique a pour effet que, en fonction de l'utilisation, des qualités différentes peuvent être obtenues en fixant la roue dans un sens ou dans l'autre.

Selon un mode de réalisation de l'invention, la structure macroscopique définit des cavités d'une largeur supérieure à 0,2 mm, en particulier comprise entre 0,25 et 3,5 mm, et/ou d'une profondeur supérieure à 0,02 mm, en particulier comprise entre 0,02 et 0,4 mm, en particulier entre 0,04 et 0,35 mm, encore en particulier entre 0,06 et 0,3 mm, encore en particulier entre 0,07 et 0,25 mm.

Le bon choix de la largeur et de la profondeur des cavités dépend de l'utilisation de la roue, en particulier du terrain et du temps.

Selon un mode de réalisation de l'invention la zone de freinage, en particulier la surface, est en fibres de verre, de carbone et/ou d'aramide, noyées dans une matrice pouvant être de type thermoplastique et/ou thermodurcissable.

Ces combinaisons de matériaux composites sont particulièrement avantageuses par rapport au rapport poids/rigidité.

Selon un mode de réalisation de l'invention la structure macroscopique est réalisée uniquement dans la matrice du matériau composite, en épargnant les fibres.

En fonction de l'utilisation des roues, il peut être favorable d'avoir des coefficients d'adhérence et glissement différents. En fonction de la quantité de fibres qui sont dégagées, les coefficients d'adhérence et glissement ont la tendance à augmenter.

Selon un mode de réalisation de l'invention, la répartition circonférentielle de la structure macroscopique est apériodique.

Selon un mode de réalisation, la structure macroscopique forme des irrégularités le long de la zone de freinage et/ou au moins deux zones de freinage opposées d'une jante ont des structures macroscopiques différentes, de sorte à éviter la mise en résonance de la roue pendant un freinage.

Selon un mode de réalisation, la zone de freinage fait partie de la jante, en particulier des flancs de la jante et/ou d'une partie liant les flancs, d'un disque de frein.

Si la zone de freinage fait partie des flancs de la jante d'une roue, la roue peut être utilisée sur des vélos traditionnels avec un frein sur jante.

Il faut remarquer que tous les modes de réalisation de la jante selon l'invention peuvent être combinés les uns avec les autres.

L'objectif de l'invention est également atteint par la mise en oeuvre des méthodes de fabrication d'une jante comprenant les étapes suivantes : fabriquer au cours d'un façonnage primaire une forme primitive de jante ayant au moins une zone de freinage, ladite forme primitive de jante étant essentiellement constituée de matériau composite ; usinage d'au moins une partie de la zone de freinage de façon à former une structure macroscopique.

De préférence, la zone de freinage est constituée par des fibres noyées dans une matrice et en ce que l'usinage de ladite zone consiste à retirer la résine sans affecter les fibres, notamment par gravage laser.

Un avantage de la méthode de fabrication d'une jante selon l'invention consiste dans le fait qu'un usinage dans une étape suivante permet de créer une structure macroscopique bien définie.

Selon un mode de réalisation, l'usinage de la zone de freinage est effectué par enlèvement sélectif d'un des composants du matériau composite, en particulier de la résine.

L'enlèvement sélectif de la matrice du matériau composite permet de ne pas détériorer les caractéristiques mécaniques des fibres.

L'invention sera du reste mieux comprise en se rapportant à la description qui suit en référence aux dessins annexés illustrant, à titre d'exemple, des modes de réalisation.
La figure 1 est une vue schématique d'une roue avec une jante selon un premier mode de réalisation de l'invention.
La figure 2a et 2b sont des vues de coupe transversale schématiques d'une jante selon le premier mode de réalisation de l'invention.
La figure 3 est une vue schématique d'une roue avec une jante selon un deuxième mode de réalisation de l'invention.
Les figures 4a, 4b, 4c représentent schématiquement une vue de côté partielle d'une jante avec des structures macroscopiques symétriques selon trois modes de réalisation différents.
Les figures 5a, 5b, 5c représentent schématiquement une vue de côté partielle d'une jante avec des structures macroscopiques asymétriques selon trois autres modes de réalisation différents.
Les figures 6a, 6b, 6c représentent des coupes transversales schématiques de la zone de freinage 2 en trois modes de réalisation différents.
Les figures 7a, 7b, 7c représentent une coupe schématique transversale de la zone de freinage avec des cavités selon trois modes de réalisation différents.
La figure 8 représente une coupe schématique transversale des cavités avec des témoins d'usure.
Les figures 9a, 9b, 9c représentent des coupes schématiques transversales d'une cavité avec des témoins d'usure selon trois modes de réalisation différents.
Les figures 10a, 10b représentent des vues d'en dessus de deux zones de freinage avec des marques selon des modes de réalisation différents.
La figure 11a est une vue en coupe de la couche superficielle d'une jante composite avant la réalisation des structures macroscopiques.
La figure 11b est une vue en coupe de la couche superficielle d'une jante composite traitée selon les procédés connus dans l'art antérieur.
La figure 11c est une vue en coupe de la zone de freinage lorsqu'elle est traitée selon l'une des modalités de réalisation de l'invention.
Les figures 12a à 12d sont des vues de côté partielles selon quatre modes de réalisations différents.
La figure 13 est une vue d'avant de la zone d'une fourche de vélo.

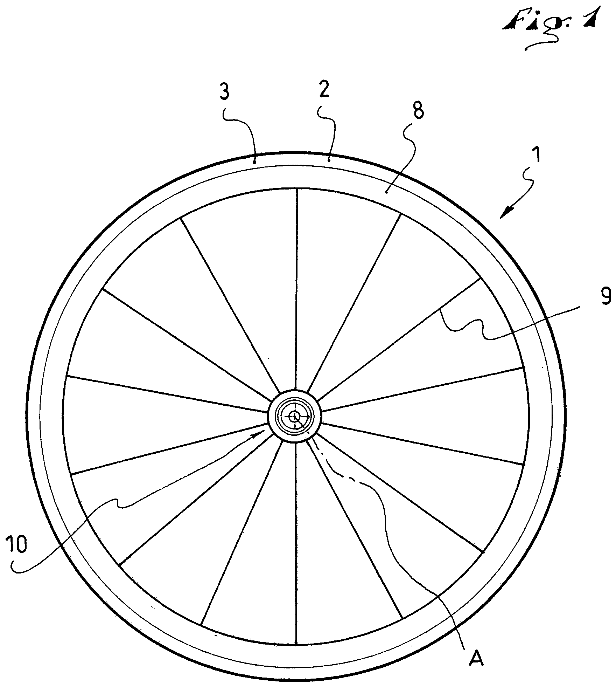

La roue représentée à la figure 1 est destinée à être montée sur un vélo. Elle comporte une jante 1, des rayons 9, et un moyeu 10 autour d'une axe de symétrie A selon un premier mode de réalisation de l'invention. Ainsi, la roue est une roue à rayons. La jante 1 a une forme annulaire et comporte deux flancs 3, 4 (dont seulement un est visible dans cette vue) une partie qui lie les flancs 8. Selon des modes alternatifs de réalisation les rayons 9 sont recouverts par un flasque. Selon d'autres modes alternatifs de réalisation la roue comporte en plus un disque de frein. Toutes ces réalisations basées selon le premier mode de réalisation de l'invention ont en commun le fait que sur l'élément, qui porte la zone de freinage 2, c'est-à-dire les flancs 3, 4, la partie qui lie les flancs 8, le disque de frein ou le couvercle des rayons 9, une zone de freinage 2 est agencée qui porte une structure macroscopique 6. Cette zone de freinage 2 est en un matériau composite, et elle recouvre au moins une partie de cette zone.

Dans chaque mode, la zone de freinage 6 peut être agencée sur les deux flancs 3, 4 ou les deux côtés de la partie qui lie les flancs 8, le disque de frein ou le couvercle des rayons 9 ou seulement sur un côté. De même que, dans le cas où une zone de freinage se trouve sur chaque flanc 3, 4, il peut y avoir une structure macroscopique 6 sur une seule zone de freinage 2 ou sur les deux zones de freinage 2. En plus, il peut y avoir plusieurs zones de freinage d'un côté ou des deux côtés de la roue.

En plus de la zone de freinage 2, il est possible que tout l'élément qui porte la zone de freinage et/ou d'autres parties, soit en matériau composite. Dans un mode alternatif de réalisation, la jante 1 est monobloc en matériau composite comportant les flancs 3, 4, la partie qui lie les flancs 8 et les rayons 9. Dans un mode alternatif de réalisation, la jante 1 monobloc peut comporter aussi un disque de frein et/ou des éléments de la jante.

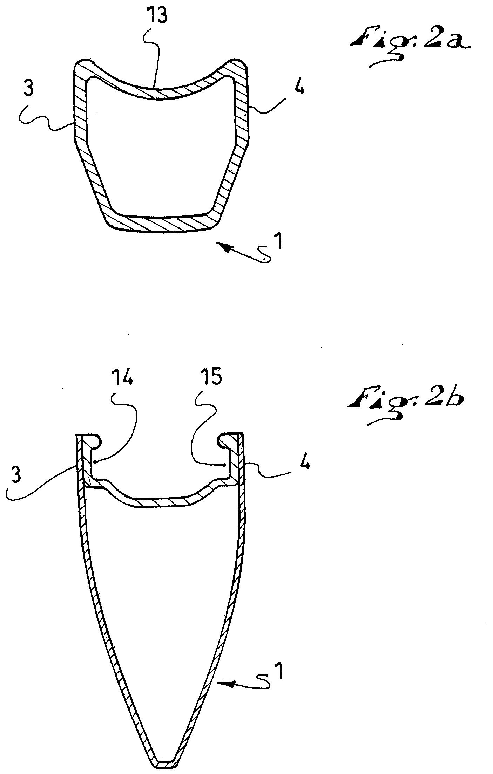

Les figures 2a et 2b représentent deux modes de réalisation de la coupe transversale d'une jante 1 selon l'invention. La figure 2a est adaptée pour un pneumatique tubulaire (non représenté) parfois dénommé "boyau". Celui-ci est collé sur la surface 13 de la jante 1.

Le mode de réalisation décrit à la figure 2b est adapté pour un pneumatique avec tringles, destiné à coopérer avec des reliefs 14, 15 correspondants de la jante 1. Dans un mode de réalisation, la zone de freinage 2 en matériau composite est agencée sur au moins un des flancs 3, 4. Dans un autre mode de réalisation, deux zones de freinage 2 sont agencées sur des faces opposées de la jante 1. Néanmoins, les zones de freinage 2 peuvent être agencées sur un autre élément de la jante 1 ou de la roue. Même si, dans les représentations des figures 2a et 2b, la jante 1 est un profil creux d'une roue à rayons, il est possible de produire une jante 1 massive et/ou d'une roue à disque.

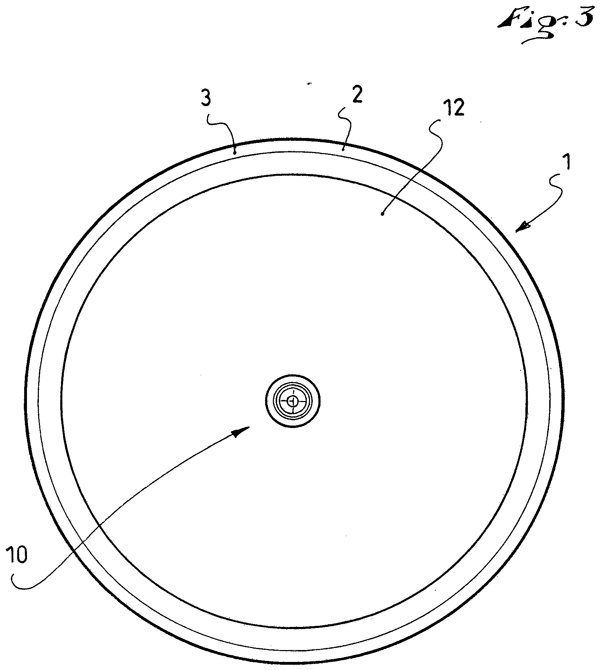

La roue représentée à la figure 3 est une roue à disque identique destinée à être montée sur un vélo. Elle comporte une jante 1 selon un deuxième mode de réalisation. Cette roue n'a pas de rayons 9, mais la jante 1 a la forme d'un disque 12.

La jante 1 est, au moins partiellement, constituée d'un matériau composite. La zone de freinage 2 de cette jante 1 se trouve sur un élément en matériau composite.

Il peut y avoir une zone de freinage 2 de chaque côté de la jante 1 ou seulement sur un côté. Là où les zones de freinage 2 sont recouvertes, au moins partiellement, d'une structure macroscopique 6.

De préférence, la jante 1 est monobloc. Dans un mode alternatif de réalisation, la jante 1 monobloc peut comporter aussi un disque de frein et/ou des éléments de la jante.

De préférence, la jante peut comporter aussi un disque de frein et/ou des éléments de jante.

Dans chaque mode alternatif du deuxième mode de réalisation, la zone de freinage 6 peut être sur les deux flancs 3, 4, le disque 12 ou un disque de frein. De même que, dans le cas où une zone de freinage se trouve sur chaque flanc 3, 4 ou plus généralement, de chaque côté de la jante 1, il peut y avoir une structure macroscopique 6 sur une zone de freinage 2 ou les deux zones de freinage 2. En plus, il peut y avoir plusieurs zones de freinage 2 d'un côté ou des deux côtés de la jante 1.

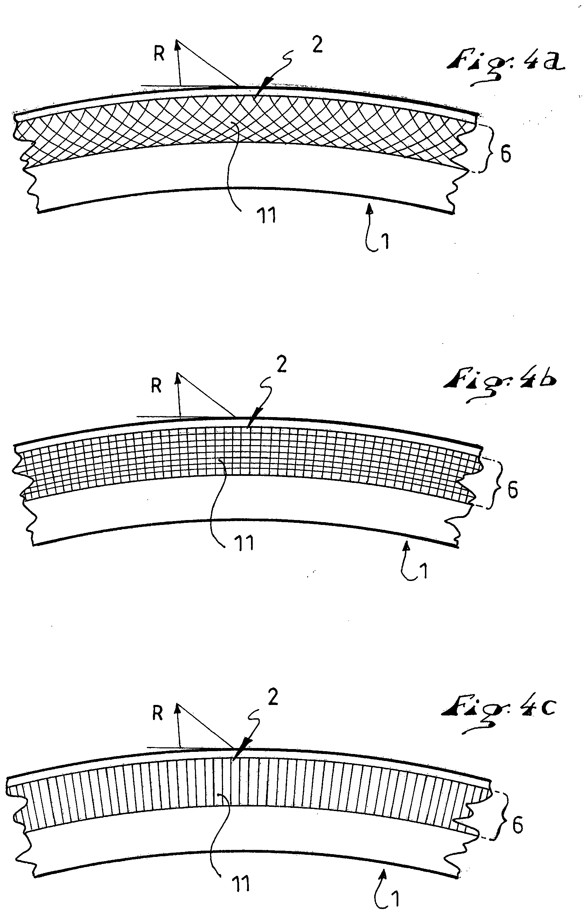

Les figures 4a, 4b et 4c représentent des structures macroscopiques 6 symétriques. Les trois modes de réalisations des structures macroscopiques 6 ont en commun qu'elles sont symétriques par rapport à l'axe de symétrie central de la jante 1.

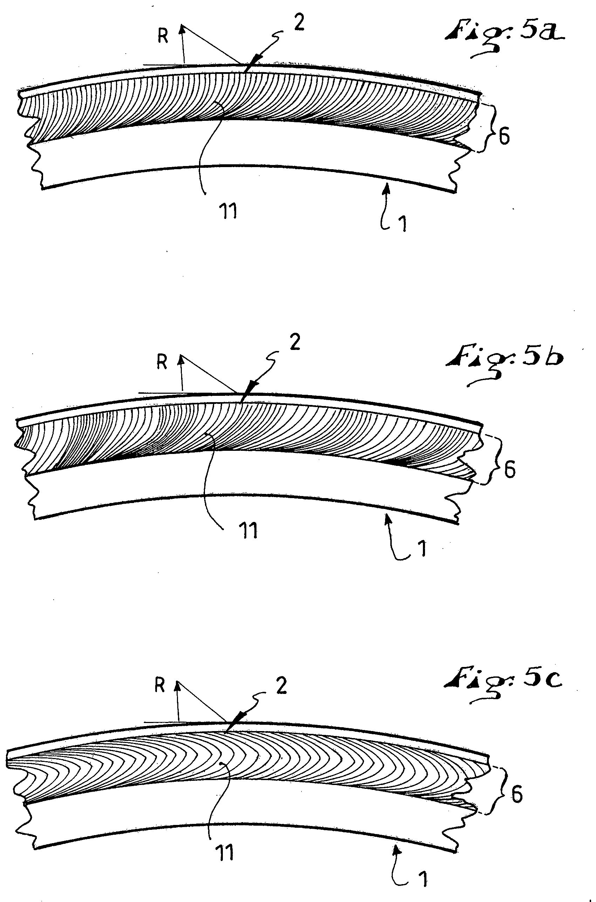

Les figures 5a, 5b et 5c représentent des structures macroscopiques 6 asymétriques. Les trois modes de réalisation des structures macroscopiques 6 ont en commun qu'elles sont asymétriques par rapport à l'axe de symétrie central de la jante 1.

Quelles que soient les caractéristiques de symétrie des structures macroscopiques 6, au moins quelques-unes des cavités 11 des structures macroscopiques 6 ont une composante radiale R sur au moins une section par rapport à l'axe de symétrie centrale A de la jante 1. Cette composante radiale R est représentée sur toutes les figures 4 et 5 par une répartition pour un point exemplaire de la trajectoire d'une cavité 11 dans la composante radiale R et la composante horizontale et provoque une force radiale exercée sur les molécules d'eau quand la jante 1 tourne. Ainsi, l'humidité est évacuée de la jante. De préférence, les structures macroscopiques 6 débouchent vers l'extérieur de la jante. C'est-à-dire que l'eau, qui est amenée vers l'extérieur de la jante (par la force radiale), ne rencontre aucun obstacle qui pourrait empêcher l'humidité d'être enlevée de la zone de freinage 2.

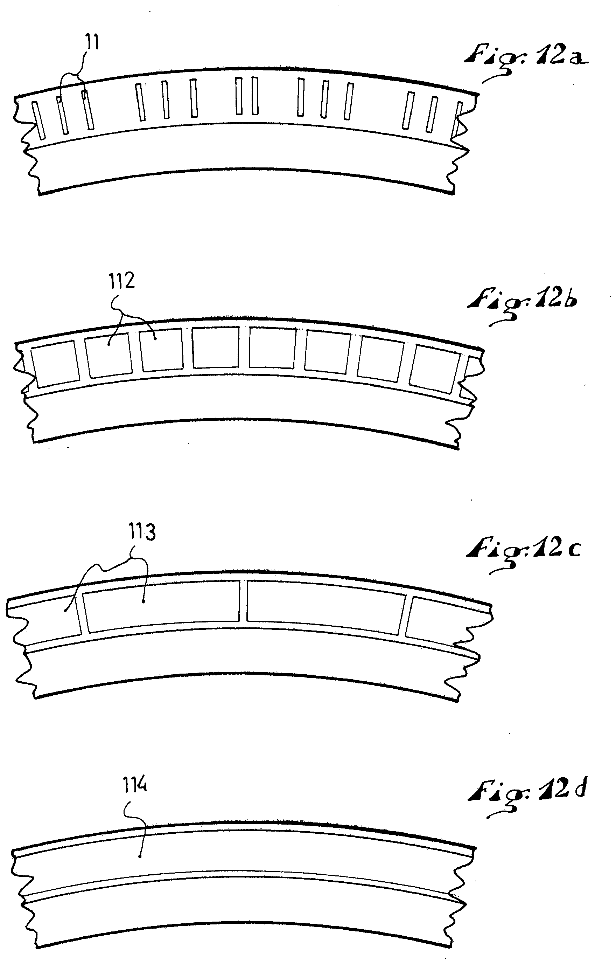

Une structure macroscopique 6 périodique ou régulière peut entraîner des résonances de la jante 1 ou bien de la roue. Cet effet peut se produire dans des situations de charge ou à des vitesses de rotation particulières. C'est pourquoi, de préférence, la structure macroscopique 6 forme des irrégularités le long de la zone de freinage 2. Cela veut dire que les cavités 11, qui forment la structure macroscopique 6 d'une jante 1, varient le long de la zone de freinage 2 selon un mode non périodique. Une mise en résonance du système de la roue ou de la jante 1 dans un secteur de la zone de freinage 2 pour certaines vitesses de rotation, est alors amortie ou stoppée par un autre secteur, qui suit et qui a une autre fréquence caractéristique. De même, de préférence, au moins deux zones de freinage 2 opposées d'une jante ont des structures macroscopiques 6 différentes. Une mise en résonance du système de la roue ou de la jante 1 dans un secteur de la zone de freinage 2 sur un côté de la jante 1 ou bien la roue, est alors amortie ou annulée par un secteur de la zone de freinage 2 sur le côté opposé. Ces deux types d'amortissement de résonance peuvent aussi faire partie d'une même roue ou jante 1s. Des exemples de structure macroscopique apériodique sont représentées aux figures 5b et 12a.

Comme adaptations de la structure macroscopique 6 pour éviter la mise en résonance d'une jante, de préférence, des « irrégularités » de la structure macroscopique 6 forment un marquage de la roue. Ce marquage peut être seulement visible quand la jante 1 tourne ou quand la jante 1 est au repos ou dans les deux états, de préférence avec des effets différents pour des vitesses de rotation différentes. Les marquages peuvent être du type décoratif, formant des motifs ou illusions optiques et/ou du type fonctionnel, de préférence contenant de l'information sur le producteur et/ou le type de la jante 1.

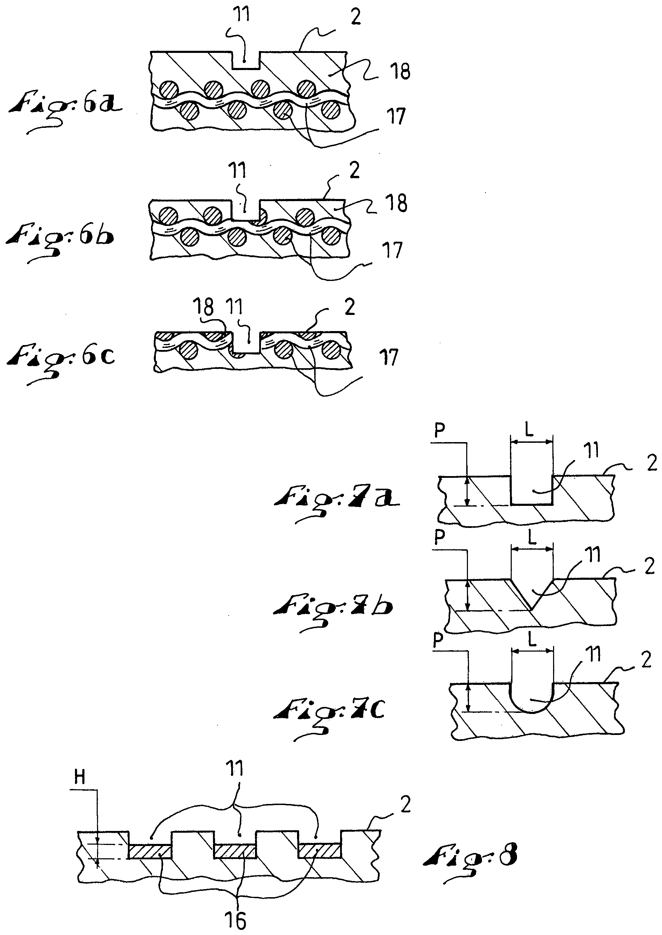

Les figures 6a, 6b et 6c sont des coupes transversales schématiques de différents modes de réalisation de la zone de freinage 2. Chaque mode a une épaisseur différente de la matrice 18 entre les fibres 17 et la surface de la zone de freinage 2. Dans le mode selon la figure 6a, des cavités 11, qui forment la structure macroscopique 6, se trouvent uniquement dans la matrice 18 du matériau composite. Dans le mode selon la figure 6b, les cavités 11 se trouvent et dans la matrice 18 et dans les fibres 17 du matériau composite. Bien sûr, ce mode pourrait être aussi atteint en prolongeant les cavités 11. Dans le mode selon la figure 6c, les cavités 11 se trouvent essentiellement uniquement dans les fibres 17 du matériau composite.

Les figures 7a, 7b et 7c représentent des modes de réalisation différents des cavités 11. Chaque figure est une coupe dans le sens longitudinal d'une cavité 11. Ainsi, selon l'invention, les cavités 11 peuvent avoir une forme rectangulaire, triangulaire ou ronde. D'autres formes sont aussi possible, en particulier des combinaisons des trois formes représentées. La largeur L des cavités 7 est comprise entre 0,2 et 4 mm, de préférence entre 0,25 et 3,5 mm, et/ou la profondeur P est comprise entre 0,02 et 0,4 mm, de préférence entre 0,04 et 0,35 mm, encore de préférence entre 0,06 et 0,3 mm, encore de préférence entre 0,07 et 0,25 mm.

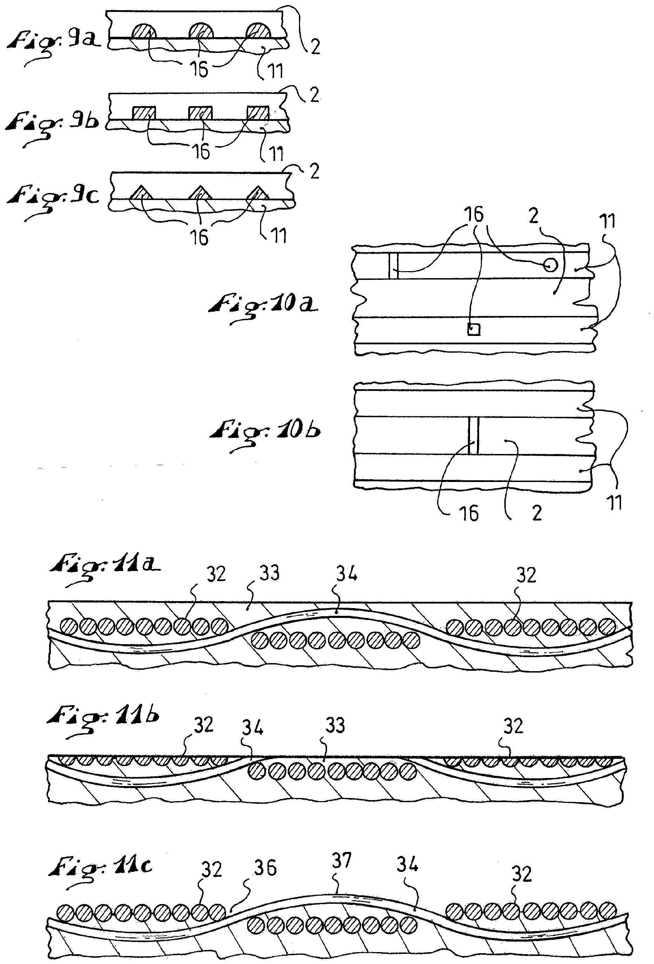

Dans certains modes de réalisation, la structure macroscopique 6 comporte des témoins d'usure. Ces témoins d'usure sont réalisés par au moins une marque 16. Aux figures 8, 9a, 9b, 9c et 10a, les marques 16 selon un mode de réalisation des témoins d'usure se trouvent dans les cavités 11. Ces marques 16 sont des formations qui s'élèvent d'une hauteur H au fond des cavités 11 comme c'est représenté à la figure 8 dans une coupe dans le sens longitudinal des cavités 11. Comme démontré dans la coupe longitudinale des cavités 11 à la figure 9, dans différents modes de réalisation, les marques 16 sont de formes rondes, rectangulaires et/ou triangulaires ou chaque combinaison des trois formes. La figure 10a, qui est une vue plongeante de la zone de freinage 2, montre finalement que les marques 16 peuvent s'étendre entre les deux parois des cavités 11 ou être des îlots, qui ne s'élèvent qu'au fond des cavités 11. De préférence, les marques 16 s'élèvent d'une hauteur H jusqu'à la moitié de la profondeur P des cavités 11, encore de préférence jusqu'à un tiers de la profondeur P des cavités 11 et encore de préférence jusqu'à un quart de la profondeur P des cavités 11.

Dans encore un autre mode de réalisation des témoins d'usure, comme démontré à la figure 10b, les marques 16 sont agencées comme des creux entre les cavités 11. De préférence, ces creux s'élèvent jusqu'à la moitié de la profondeur P des cavités 11, encore de préférence jusqu'à deux tiers de la profondeur P des cavités 11 et encore de préférence jusqu'à trois quarts de la profondeur P des cavités 11.

Il est évident pour l'homme de métier que les caractéristiques des différents modes de réalisation des témoins d'usure peuvent être combinées.

Les deux sortes de marques 16 ou bien témoins d'usure ont en commun que, quand, au fur et à mesure, la zone de freinage 2 entre les cavités 11 est utilisée lors de l'utilisation de la jante 1, l'écart entre la marque 16 et la surface de la zone de freinage 2 se réduit de plus en plus. Ainsi, l'utilisateur peut tâter avec les doigts, si les cavités sont encore fonctionnelles. Au plus tard, quand la surface de la zone de freinage 2 et les marques 16 arrivent dans un même plan, l'effet d'amélioration des caractéristiques de freinage, en particulier en conditions humides, décline et l'utilisateur ferait bien d'échanger la jante 1.

Les possibilités de choix de matériaux pour la fabrication d'une roue en matériau composite sont nombreuses. La matière plastique renforcée de fibres de la zone de freinage peut contenir comme fibres renforçantes ou de fibres de tissu de préférence celles appartenant au groupe comprenant des fibres naturelles et synthétiques, en particulier de carbone (fibres de carbone, graphite), de verre, d'aramide, des matériaux de base en céramique, tels que le nitrure de bore, le carbure de silicium ou du silicate, ou des combinaisons de ces fibres. La formation de la matrice de la matière plastique renforcée de fibres peut être choisie dans le groupe comprenant des résines thermoplastiques, telles que substances naturelles modifiées, les homopolymères et les copolymères ou mélanges de polymères de nitrate de cellulose, acétate de cellulose, éthers de cellulose ou les éthers mixtes de cellulose, les polyamides, les polycarbonates, les polyesters, les esters de vinyle, les polyoléfines, oxydes de polyphénylène, des ionomères, des polysulfones, des polyacétals de vinyle, le chlorure de polyvinyle, le chlorure de vinylidène, d'alcool polyvinylique, de l'acétate de vinyle, le polyméthacrylate de méthyle, polyéther chloré, le polyacrylonitrile, le polystyrène, des polyacétals, des fluoroplastiques, polyvinyliques, les polyéthercétones, l'acrylonitrile, le butadiène-styrène, copolymères styrène-acrylonitrile, les polytéréphtalates, les polyuréthanes linéaires, le polyéthylène (PE), le polypropylène et le polyamide et / ou de résines thermodurcissables telles que des résines de coulée et des résines d'époxy, une résine de méthacrylate, une résine de phenacryl, une résine polyester, une résine phénolique, une résine d'isocyanate, une résine mélamine-formaldéhyde, un ester de vinyle, et des polyuréthanes en polymère, sons forme d'monomère ou sous forme de mélange, ainsi que des formes mixtes de polymères thermoplastiques et thermodurcissables.

En principe, ils existent deux procédés majeurs de fabrication d'une jante 1 selon l'invention.

Dans un mode de réalisation, la structure macroscopique 6 à la surface de la zone de freinage 2 est formée pendant le façonnage primaire. Pour cela, il faut avoir un moule de façonnage primaire spécial pour fabriquer la forme primitive de la jante 1, qui comporte une forme négative apte à former la structure macroscopique 6 à la surface d'au moins une partie de la zone de freinage 2 pendant le façonnage primaire.

Dans un autre mode de réalisation, la jante 1, déjà fabriquée comme forme primitive dans n'importe quel processus, subit un usinage d'au moins une partie de la zone de freinage 2 afin de former la structure macroscopique 6 à la surface dans une étape suivante.

Dans des modes de réalisation différents, cet usinage est effectué par au moins un des procédés de gravure au laser, de fraisage, de tournage, de limage ou de grattage. Tous ces usinages peuvent être effectués par usinage CNC.

Parmi tous les procédés d'obtention, la gravure au laser est particulièrement avantageuse dans la mesure où la profondeur P et la forme des cavités 11 de la structure macroscopique 6 ainsi que des marques 16, qui servent comme témoins d'usure, peuvent être très aisément contrôlées. De plus, la gravure laser permet de bien contrôler un enlèvement sélectif de la matière du matériau composite, en particulier de la résine, qui est favorable afin d'obtenir des caractéristiques du matériau positives comme un meilleur coefficient de frottement, notamment pour le freinage sous la pluie.. En fait, pour fabriquer une structure macroscopique 6 avec des cavités très fines dans un matériau composite, en particulier des fibres de carbone dans une résine, la demanderesse a constaté de façon inattendue, que la gravure au laser donne des résultats extraordinaires par rapport à d'autres procédés.

Parmi les avantages que procure la gravure laser, il y a le fait de pouvoir réaliser des cavités ayant une superficie plus importante sans que cela ne se traduise par un affaiblissement de la structure de la roue.

La figure 11a représente en coupe la superficie d'une jante carbone selon l'invention avant que les structures macroscopiques ne soient faites dans la zone de freinage. Les fibres carbone sont tissées, les fibres longitudinales 34 passent alternativement dessus et dessous des fibres transversales 32. La matrice de résine 33 recouvre intégralement les fibres de carbone, dessous et dessus.

La figure 11b représente une vue en coupe similaire de la figure 11a lorsque la surface de freinage est usinée intégralement par les moyens connus de l'art antérieur, c'est-à-dire par fraisage, tournage ou ponçage. Les fibres de carbone sont alors non seulement mises à nu mais également sectionnées, endommagées, ce qui donne un aspect brut à la superficie de la zone de freinage. De plus, dans certaines zones la résine reste affleurante, si bien qu'on ne peut pas atteindre la proportion de 100% de fibres mises à nu.

La figure 11c représente la vue en coupe de la superficie de la zone de freinage selon les modes de réalisation de l'invention dans lesquels la gravure laser est utilisée pour réaliser un enlèvement sélectif de matière. Après réalisation des structures macroscopiques sur la bande de freinage, seule la résine superficielle, c'est-à-dire la couche de résine qui se trouve au-dessus du dernier pli de fibre est retirée. Ainsi les fibres de carbone ne sont pas endommagées et on retrouve visuellement l'aspect du tissu de carbone. Si la jante a un aspect fini brillant, alors les portions qui ont été traitées au laser auront un aspect visuel très différent de celui du reste de la jante. Si en revanche, la jante a un aspect fini mat, alors la différence visuelle entre les portions traitées au laser et des autres sera bien moindre, voire invisible.

Indépendamment de l'aspect visuel, l'état de surface est bien meilleur avec un traitement laser selon l'une des modalités de réalisation de l'invention. En effet, alors que l'état de surface est uniforme et lisse et plane lorsque la zone de freinage n'est pas modifiée (cf. figure 11a), elle peut être plus rugueuse lorsqu'elle est usinée avec des outils de coupe (cf. figure 11b). En revanche lorsque la zone de freinage est traitée par laser conformément à l'invention, la surface n'est pas plane et elle reste douce, comme peut l'être un tissu.

La non-planéité des portions de la zone de freinage traitées par le laser se traduit par une multitude de petites structures macroscopiques. Ces structures macroscopiques sont notamment visibles à l'œil nu car les portions de fibre mises à nu ont un aspect visuel différent des zones ou la résine est affleurante. De plus les structures macroscopiques sont particulièrement décelables au toucher. En effet, lorsqu'on passe les doigts sur la zone de freinage, on sent une succession de zones en légère dépression 36, correspondant aux intersections des fibres longitudinales 34 avec les fibres transversales 32, et de zones légèrement surélevées 37, correspondant aux portions de fibres passant sur les autres.

Pour pouvoir réaliser un enlèvement sélectif de matière, il faudra sélectionner le laser adéquat. Tout d'abord, il faudra sélectionner un laser pour lequel la résine n'est pas transparente, de préférence un laser dont la source lumineuse est le CO₂ et qui émet un rayon laser dans l'infrarouge lointain, comme par exemple un rayon laser dont la longueur d'onde est d'environ 10,6 µm.

La différence existante entre les températures de calcination des résines (entre 400° et 600°C) et des fibres de carbone (plus de 1500°C) permet de régler le laser pour que les fibres de carbone ne soient pas affectées par le laser. Cependant compte tenu du mode de fabrication des jantes en matériau composite fibres et résine, il n'est pas toujours possible de déterminer avec une très grande précision l'épaisseur de la couche superficielle de résine, et par conséquent la quantité surfacique de résine qu'il faut retirer pour réaliser les structures macroscopiques. C'est pourquoi, on réglera la puissance du laser de telle façon que au moins 80% de la résine de la couche superficielle d'une portion de la zone de freinage traitée par le laser soit retiré et que au maximum 20% de la superficie de la zone traitée par le laser soit constitué par des fibres entamées, c'est-à-dire des fibres découpées par le laser en des fibres partiellement endommagées par celui-ci. Avantageusement, selon l'une des modalités de l'invention, une proportion comprise entre 80% et 100% de fibres sera mise à nu, et de préférence toute la résine de la couche superficielle a été retirée des zones traitées par laser.

La méthode d'enlèvement sélectif de matière par l'utilisation d'un laser adapté permet de traiter économiquement des portions de plus grande superficie qu'il n'est possible de le faire avec d'autres moyens.

Les figures 12a à 12d décrivent différents modes de réalisation de l'invention lorsqu'on traite les zones de freinage avec un appareil de gravure laser.

A la figure 12a, les portions traitées constituent des cavités 11 de quelques millimètres de largeur et dont la longueur est environ égale à celle de la hauteur de la zone de freinage. Dans cet exemple, la structure macroscopique est constituée par une succession de cavités similaires les unes des autres, réparties le long des zones de freinage selon un schéma non périodique. En effet, une série de deux cavités est entourée d'une pluralité de séries de trois cavités.

A la figure 12b, les portions traitées par le laser constituent des pavés 112 de forme sensiblement rectangulaire dont les côtés sont compris entre 10 à 20 mm.

A la figure 12c, les portions traitées constituent des secteurs 113 de plusieurs centimètres de largeur.

A la figure 12d, la portion 114 traitée par gravure constitue la totalité de la circonférence.

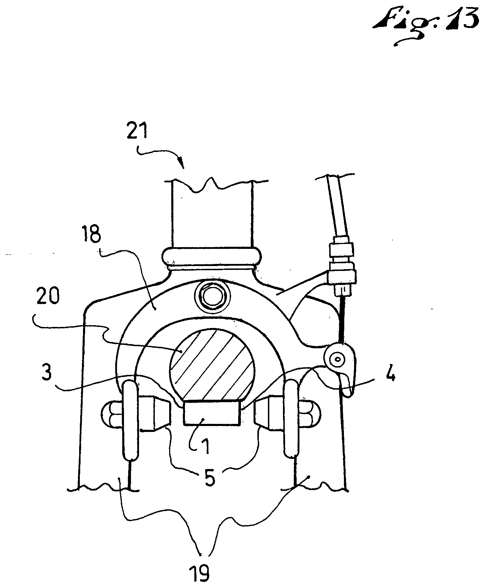

La figure 13 représente une vue d'en avant sur la zone de la fourche 19 d'un vélo 21 selon un mode de réalisation. Une roue avec une jante 1 et un pneumatique 20 est montée entre la fourche 19. Quand l'utilisateur du vélo 21 se sert du frein avant 18, les corps de freinage 5 se placent sur les flancs 3, 4 de la jante 1, qui porte la zone de freinage 2 avec la structure macroscopique 6 (non visible). Quand la roue tourne et s'il y a de l'humidité à la surface de la zone de freinage 2, celle-ci est repoussée par les corps de freinage 5 et forme un film sur la jante 1, qui détériore les caractéristiques de freinage. À un moment, la zone de freinage 2 (si elle ne couvre pas tout le flanc 3; 4) arrive aux corps de freinage 5. Ainsi, l'humidité repoussée en avant des corps de freinage 5 et le film d'humidité sous les corps de freinage 5 sont évacués par la force radiale sur les molécules d'eau, qui est générée par l'interaction entre les corps de freinage 5 et les zone de freinage 2, vers l'extérieur de la jante 1. À l'extrémité extérieure de la jante 1 vers le pneumatique 20, l'humidité quitte finalement la jante et/ou tombe à terre.

## Revendications

1. Méthode de fabrication d'une jante (1) pour une roue, en particulier pour un vélo comprenant les étapes suivantes :
- fabriquer au cours d'un façonnage primaire une forme primitive de jante ayant au moins une zone de freinage (2), ladite forme primitive de jante étant essentiellement constituée de matériau composite, et ladite zone de freinage étant constituée par des fibres noyées dans une matrice de résine,
- usinage par gravure laser d'au moins une partie de la zone de freinage (2) de façon à former une structure macroscopique, l'usinage de ladite zone consistant à retirer la résine sans affecter les fibres.

2. Méthode de fabrication selon la revendication 1, **caractérisée en ce que** l'appareil de gravure laser émet un rayonnement dans l'infrarouge lointain.

3. Méthode selon l'une des revendications 1 à 2, **caractérisée en ce que** la zone de freinage (2), en particulier la surface, est en fibres de verre, en carbone et/ou en aramide, noyées dans une matrice pouvant être de type thermoplastique et/ou thermodurcissable.

4. Méthode selon l'une des revendications 1 à 3, **caractérisée en ce que** la structure macroscopique est constituée de cavités et les cavités (11) débouchent vers l'extérieur de la jante (1) et/ou qu'au moins quelques-unes des cavités (11) ont une composante radiale (R) sur au moins une section par rapport à l'axe de symétrie centrale (A) de la jante (1).

5. Méthode selon l'une des revendications 1 à 4, **caractérisée en ce que** la roue (1) comporte au moins une marque (16) dans la structure macroscopique (6) afin de servir de témoin d'usure de la jante (1).

6. Méthode selon l'une des revendications 1 à 5, **caractérisée en ce que** la structure macroscopique (6) forme des irrégularités le long de la zone de freinage (2) et/ou au moins deux zones de freinage (2) opposées d'une jante ont des structures macroscopiques (6) différentes afin d'éviter la mise en résonance de la roue pendant un freinage.

7. Méthode selon l'une des revendications 1 à 6, **caractérisée en ce que** la zone de freinage (2) fait partie d'au moins un des éléments de la jante (1) suivants :
des flancs (3; 4), d'une partie liant les flancs (8), d'un disque de frein, du disque d'une roue à disque.

8. Méthode selon l'une des revendications 1 à 7, **caractérisée en ce que** la structure macroscopique (6) forme en plus un marquage décoratif et/ou fonctionnel de la jante (1).

9. Méthode selon l'une des revendications 4 à 8, **caractérisée en ce que** les cavités d'une largeur supérieure à 0,2 mm, en particulier comprise entre 0,25 et 3,5 mm, et/ou une profondeur supérieure à 0,02, en particulier comprise entre 0,02 et 0,4 mm, en particulier entre 0,04 et 0,35 mm, encore en particulier entre 0,06 et 0,3 mm, encore en particulier entre 0,07 et 0,25 mm.

10. Roue avec une jante (1) obtenue par la méthode de fabrication selon une des revendications 1 à 9.

## Patentansprüche

1. Verfahren zur Herstellung einer Felge (1) für ein Rad, insbesondere für ein Fahrrad, die folgenden Schritte umfassend:
- Herstellen, während einer primären Formgebung, einer Urform der Felge, die wenigstens einen Bremsbereich (2) aufweist, wobei diese Urform der Felge im Wesentlichen aus Verbundmaterial besteht und der Bremsbereich aus Fasern besteht, die in eine Harzmatrix eingebettet sind,
- Bearbeitung wenigstens eines Teils des Bremsbereichs (2) durch Lasergravur, um eine makroskopische Struktur zu bilden, wobei die Bearbeitung des Bereichs darin besteht, das Harz abzutragen, ohne die Fasern anzugreifen.

2. Verfahren zur Herstellung nach Anspruch 1, **dadurch gekennzeichnet, dass** das Lasergravurgerät eine Strahlung im fernen Infrarotbereich aussendet.

3. Verfahren nach einem der Ansprüche 1 bis 2, **dadurch gekennzeichnet, dass** der Bremsbereich (2), insbesondere die Oberfläche, aus Glas-, aus Kohlenstoff- und/oder aus Aramidfasern besteht, die in eine Matrix eingebettet sind, die vom thermoplastischen und/oder duroplastischen Typ sein kann.

4. Verfahren nach einem der Ansprüche 1 bis 3, **dadurch gekennzeichnet, dass** die makroskopische Struktur aus Hohlräumen besteht und die Hohlräume (11) auf der Außenseite der Felge (1) münden, und/oder dass wenigstens einige der Hohlräume (11) eine radiale Komponente (R) auf wenigstens einem Abschnitt bezüglich der mittleren Symmetrieachse (A) der Felge (1) aufweisen.

5. Verfahren nach einem der Ansprüche 1 bis 4, **dadurch gekennzeichnet, dass** das Rad (1) wenigstens eine Markierung (16) in der makroskopischen Struktur (6) aufweist, um als Verschleißanzeige der Felge (1) zu dienen.

6. Verfahren nach einem der Ansprüche 1 bis 5, **dadurch gekennzeichnet, dass** die makroskopische Struktur (6) Unregelmäßigkeiten entlang des Bremsbereichs (2) bildet und/oder wenigstens zwei einander gegenüberliegende Bremsbereiche (2) einer Felge unterschiedliche makroskopische Strukturen (6) aufweisen, um das Erzeugen einer Resonanz des Rades während einer Bremsung zu vermeiden.

7. Verfahren nach einem der Ansprüche 1 bis 6, **dadurch gekennzeichnet, dass** der Bremsbereich (2) Teil wenigstens eines der folgenden Elemente der Felge (1) ist: der Flanken (3; 4), eines die Flanken verbindenden Teils (8), einer Bremsscheibe, der Scheibe eines Scheibenrades.

8. Verfahren nach einem der Ansprüche 1 bis 7, **dadurch gekennzeichnet, dass** die makroskopische Struktur (6) außerdem eine dekorative und/oder funktionale Markierung der Felge (1) bildet.

9. Verfahren nach einem der Ansprüche 4 bis 8, **dadurch gekennzeichnet, dass** die Hohlräume eine Breite von mehr als 0,2 mm, insbesondere zwischen 0,25 und 3,5 mm, und/oder eine Tiefe von mehr als 0,02, insbesondere zwischen 0,02 und 0,4 mm, speziell zwischen 0,04 und 0,35 mm, noch spezieller zwischen 0,06 und 0,3 mm, noch spezieller zwischen 0,07 und 0,25 mm aufweisen.

10. Rad mit einer Felge (1), die durch das Verfahren zur Herstellung nach einem der Ansprüche 1 bis 9 erhalten wurde.

## Claims

1. Method for manufacturing a rim (1) for a wheel, in particular for a bicycle, comprising the following steps of:
- manufacturing, during primary shaping, a basic rim form having at least one braking area (2), said basic rim form consisting substantially of composite material, and said braking area consisting of fibres embedded in a resin matrix,
- machining, by laser etching, at least one part of the braking area (2) so as to form a macroscopic structure, the machining of said area consisting in removing the resin without affecting the fibres.

2. Manufacturing method according to Claim 1, **characterized in that** the laser etching machine outputs radiation in the far infrared.

3. Method according to either of Claims 1 and 2, **characterized in that** the braking area (2), in particular the surface, is made of glass, carbon and/or aramid fibres embedded in a matrix that may be of the thermoplastic and/or thermosetting type.

4. Method according to one of Claims 1 to 3, **characterized in that** the macroscopic structure consists of cavities and the cavities (11) open onto the outside of the rim (1), and/or **in that** at least some of the cavities (11) have a radial component (R) in at least one section with respect to the central axis of symmetry (A) of the rim (1).

5. Method according to one of Claims 1 to 4, **characterized in that** the wheel (1) has at least one mark (16) in the macroscopic structure (6) in order to act as a wear indicator of the rim (1).

6. Method according to one of Claims 1 to 5, **characterized in that** the macroscopic structure (6) forms irregularities along the braking area (2) and/or at least two opposite braking areas (2) of a rim have different macroscopic structures (6) in order that the wheel is not set into resonance during braking.

7. Method according to one of Claims 1 to 6, **characterized in that** the braking area (2) is part of at least one of the following elements of the rim (1) :
the sidewalls (3; 4), a part linking the sidewalls (8), a brake disc, the disc of a disc wheel.

8. Method according to one of Claims 1 to 7, **characterized in that** the macroscopic structure (6) also forms a decorative and/or functional marking of the wheel (1).

9. Method according to one of Claims 4 to 8, **characterized in that** the cavities have a width greater than 0.2 mm, in particular between 0.25 and 3.5 mm, and/or a depth greater than 0.02, in particular between 0.02 and 0.4 mm, in particular between 0.04 and 0.35 mm, even more particularly between 0.06 and 0.3 mm, even more particularly between 0.07 and 0.25 mm.

10. Wheel having a rim (1) obtained by the manufacturing method according to one of Claims 1 to 9.
